# EUROPEAN PATENT APPLICATION

(11) **EP 1 829 630 A2**
(43) Date of publication of application: **05.09.2007**
(21) Application number: 06757936.7
(22) Date of filing: 26.04.2006
(51) Int. Cl.: B22D 18/02, B22D 19/08, F16C 33/08

(54) **METHOD FOR PRODUCING A PLAIN BEARING ANTIFRICTION LAYER**

(30) Priority: 03.05.2005 RU 2005114296
(71) Applicant: Institut Problem Sverkhplastichnosti Metallov Ran, Bashkortostan, 450001 (RU)
(72) Inventor: BARYKIN, Nikolay Petrovich, Ufa, 450022 (RU); FAZLYAKHMETOV, Rustem Fauzievich, Ufa, 450083 (RU)
(74) Representative: Stein, Jan Anders Lennart
(86) International application number: PCT/RU2006/000207
(87) International publication number: WO 2006/118484

(57) **Abstract**

The invention relates to foundry engineering, more specifically to producing an antifriction layer of a plain bearing by casting babbitt into a bearing shell or backing and is applicable to the manufacture and renewal of plain bearings.

The invention is aimed at improving the quality of a plain bearing antifriction layer.

A method for producing an antifriction layer of a plain bearing including: casting babbitt into a bearing shell or backing and forcedly cooling the babbitt at a speed providing structural uniformity of the antifriction layer, mainly by cooling babbitt on the cast-in layer side, **characterized in that** said casting of babbitt into a bearing shell or backing produces a semifinished antifriction layer which is subjected to plastic deformation by means of a punch under superplasticity conditions to produce an antifriction layer, the bearing shell or backing being used as a die.

## Description

The invention relates to foundry engineering, more specifically to producing an antifriction layer of a plain bearing by casting babbitt into a bearing shell or backing and is applicable to the manufacture and renewal of plain bearings.

Babbitt metal is widely used as an antifriction layer material in plain bearings that are employed as shaft bearings in assemblies operating under high load conditions, e.g. steam turbines, turbine generators, high-performance high-speed gear systems, large impeller pumps, propeller shafts, owing to its superior antifriction properties and the ability to run-in with a steel shaft.

The most simple and economic method for producing an antifriction layer of a plain bearing includes stationary casting a molten babbitt into a heated bearing shell or backing and then cooling the cast-in layer and the bearing as a whole in air [1]. The shell or backing is previously cleaned, degreased, etched, rinsed and tinned. The method however cannot circumvent formation of shrinkage pores, casting blisters, considerably big slag impurities, coarse β-phase grains (SnSb compounds), and structural inhomogeneity in the babbitt layer. Each of the aforementioned drawbacks appearing in the process of casting and cooling and acting in the bearing service as a stress concentrator gives rise to fatigue crack birth and dramatic reduction of the babbitt fatigue strength. Most hazardous in terms of fatigue crack birth and propagation are shrinkage pores and casting blisters in the babbitt layer adjacent to the shell or backing. Moreover, the pores and casting blisters in the adjacent layer deteriorate stability of the adhesive bond between babbitt and the shell or backing material.

To extend service life of plain bearings and reduce the number of required repairs associated with shutdown of the aforementioned systems, it is important to improve quality of the antifriction layer and enhance its bond with a shell or backing.

A known method for producing an antifriction layer of a plain bearing [2] comprises: preparing a shell surface to casting, similarly to method [1], heating the shell to a temperature of between 240°C and 280°C, stationary casting babbitt into the shell, forcedly cooling the shell with an air-water stream on the shell exterior to a temperature of between 220°C and 230°C, and subsequently cooling in dry sand or asbestos.

At the cooling, babbitt crystallization takes place from the shell side, this contributing to reduction of shrinkage porosity in the layer adjacent to the shell.

A disadvantage of method [2], like method [1], is the presence of gas pores, casting blisters and slag impurities in the babbitt layer.

Another known method for producing an antifriction layer of a plain bearing [3] includes: tinning a recess in a bearing backing and placing in the recess a metered briquette of babbitt shaped in correspondence with the recess. The briquette is heated until melting in a protective reduction atmosphere of hydrogen and forcedly cooled, the cooling being carried out by transferring the plain bearing onto a plate cooled by a water jacket, without changing the protective reduction atmosphere. The method enables elimination of casting blisters owing to the reduction of a surface oxide film appearing when babbitt melts in the hydrogen atmosphere. Like method [2], babbitt crystallization occurs from the backing or shell side, this contributing to reduction of shrinkage porosity in the layer adjacent to the backing or shell.

Common problems of methods [2] and [3] are that β-phase grains become coarse and no structural homogeneity is provided across the antifriction layer thickness,

Another method of producing an antifriction layer of a plain bearing [4] includes: preparing a shell surface to casting, i.e. cleaning, degreasing, etching, rinsing, tinning and heating the shell; casting babbitt into the shell; forcedly cooling the shell on the side of the cast-in layer with a water-air mixture and then in air. Molten metal is supplied to a metal receiver with no contact with atmosphere. Molten metal is squeezed from the metal receiver onto a shell surface from the bottom upwards. Hydrodynamic characteristics of casting by squeezing contribute to the removal of gases and solid impurities from the alloy, so the resulting layer is strong, does not contain gas pores and slag impurities. The cast-in layer is cooled from the bottom upwards. The alignment boss containing the excessive molten babbitt acts as a feeder when babbitt shrinks.

The method makes possible the formation of a fine-grain structure in the cast-in babbitt layer and improves the structural homogeneity of the antifriction layer owing to a faster cooling on the cast-in layer side. However the cooling on the cast-in layer side increases the number of shrinkage pores in the adjacent layer due to a considerably greater thermal expansion coefficient of the cast-in layer material as compared to that of the shell material. Moreover, a shrinkage porosity gradient appears in different sections of the cast-in layer due to inefficient effect of the alignment boss as a feeder on cast-in layer regions that are remote from the alignment boss, which may lead to a non-uniform wear of the antifriction layer at a later time. The non-uniform cooling of the cast-in layer, namely from the bottom upwards, promotes the appearance of zonal stresses in the cast-in layer, this also impairing the resistance to crack formation in the antifriction layer in the bearing service.

In method [4] the presence of extended runner channels increases babbitt consumption, and removal of the cast shell is hampered as the latter must be separated from the remaining running part of the ingot.

Therefore, although the prior art methods for producing an antifriction layer of a plain bearing possess certain advantages, they suffer from a number of problems associated with casting and fail to solve the task of improving the antifriction layer quality.

The principal and additional objects of the present invention are to improve the quality of a plain bearing antifriction layer.

The object of the invention is attained in a method of producing an antifriction layer of a plain bearing, including: casting babbitt into a bearing shell or backing and then forcedly cooling the babbitt at a speed providing structural homogeneity of the antifriction layer, mainly by cooling on the side of the cast-in layer, characterized in that said casting of babbitt into a shell or backing produces a semifinished antifriction layer which is subjected to plastic deformation by means of a punch under superplasticity conditions to produce an antifriction layer, the bearing shell or backing being used as a die.

The object of the invention is further attained by the following steps:
said deformation of the semifinished antifriction layer is performed at a deformation degree of between 25% and 45%;
after said casting of babbitt the molten metal is redistributed by means of punch to produce a semifinished antifriction layer;
said casting of the molten metal is performed into a heated shell or backing, and said cooling is performed on the side of the cast-in layer by means of a punch having a temperature of no more than 100°C;
the punch has room temperature;
said casting of babbitt is performed into a shell or backing, or in an attachment shaped in accordance with the backing or shell;
said casting of babbitt is performed into a heated attachment, and said redistribution and cooling of the molten metal is performed on the side of the cast-in layer by means of a punch having a temperature of no more than 100°C;
said casting of babbitt is performed into an attachment having room temperature, and the molten metal is redistributed by means of a heated punch;
a deformation temperature is at least tₙ, where tₙ is the minimum temperature at which work plasticity of the babbitt layer is preserved having regard to a β-phase grain size obtained at the cooling step;
a deformation temperature is close to tₙ, and after the deformation a recrystallization annealing is performed by heating the bearing to a temperature of between 100°C and 150°C and holding at that temperature for 0.5-1,0 hour;
a deformation speed is in the range from 10⁻⁵ s⁻¹to 10⁻² s⁻¹, the higher the deformation temperature, the greater may be the speed selected within said range.

The invention essentially consists in using superplastic deformation in the process of forming an antifriction layer of a plain bearing. Babbitt is conventionally a non-deformable cast material, but a sub-microcrystalline structure of the matrix (α-phase) [5], representing a solid solution of antimony and copper in tin, in combination with β-phase structural homogeneity attained by a controlled cooling of the molten metal is a necessary condition that enables deformation of the babbitt layer to a predetermined degree without the risk of crack formation. Superplastic deformation also presumes the use of an appropriate deformation speed and temperature, and isothermal conditions.

An essential feature is the development, at superplastic deformation, of a grain-boundary sliding (GBS) process which is a main mechanism of superplastic deformation. It is precisely the GBS that ensures almost complete elimination of pores in the layer being deformed and filling microroughnesses on the shell or backing surface with babbitt. Furthermore, superplastic deformation assists in uncovering juvenile surfaces in the adjacent babbitt layer, that enhance the adhesive bond between babbitt and the shell or backing material. The possibility of improving the adhesive bond due to plastic deformation is especially important for tin-based alloys, to which babbitt belongs, having a high oxide film strength/metal strength ratio, in particular 330 for tin [6].

In view of the fact that to be deformed the babbitt layer should have a thickness different from a predetermined thickness of a plain bearing antifriction layer, a concept of "semifinished antifriction layer" has bee introduced.

Consequently, a stable bond between an antifriction layer and a shell or backing in combination with the absence of pores in the layer improves the quality of the plain bearing antifriction layer, reduces crack formation in service, and as a consequence, increases the service life and reduces the number of repairs of the bearing.

Additional operations of the method are directed at further improvement of the quality of a plain bearing antifriction layer.

It is preferable to perform deformation to a degree selected within the range of 25-45%. A particular deformation degree depends primarily upon a β-phase grain size in the semifinished antifriction layer, i.e. upon its work plasticity. The smaller the grain size, the more plastic is the alloy. The deformation degree also depends on the "die" shape. Although the terms "shell" and "backing", as components of a plain bearing, are identical, when they are used as a die for deformation of a semifinished antifriction layer the deformation methods will be different. The use of a backing as a die supposes a common compression to a degree of about 40-45%. The use of a shell as a die supposes the presence of back extrusion, i.e. a more labor-consuming deformation method; therefore it is preferable to perform deformation to smaller degrees, no more than 40%,

Hydrodynamic characteristics of the process of molten metal redistribution over the shell surface by means of a punch, which is quite close to the process of casting by squeezing in method [4], contribute to removal of gases and solid impurities from the alloy.

Cooling the molten metal on the side of the cast-in layer enables a structural homogeneity to be obtained across the entire babbitt layer section and reduces the number of shrinkage pores. Efficiency of this operation can be enhanced, if the cooling is performed by means of a punch, i.e. by a heat transfer process. To obtain a fine-grain structure it is preferable to perform cooling on the side of the cast-in layer using a punch having a temperature of no more than 100°C. Particularly, a punch having room temperature can be used to cool the molten metal, this also reducing power consumption in implementing the method. It should be noted that, having regard to [5], reduction of β-phase grains is essential for babbitt.

Casting babbitt into a heated shell or backing, as in method [4], promotes the formation of a preliminary bond between babbitt and the bearing backing or shell.

In the manufacture or repair of bearings having a shell or backing surface of a quite simple profile without dovetail undercuts, babbitt can be cast into an attachment shaped in correspondence with the backing or shell, then the semifinished product is removed from the attachment and subjected to deformation using the shell or backing as a die. Casting can be carried out into a heated attachment. To weaken the bond between babbitt and the attachment it is preferable to cast babbitt into the attachment having room temperature and to perform redistribution of the molten metal by a heated punch. This can ensure the most fine-grained structure in the semifinished antifriction layer, and as a consequence a lower deformation temperature may be used for the semifinished layer. The use of a lower deformation temperature offers the following advantages: babbitt suffers a smaller oxidation, and a fine-grain structure is preserved in a finished plain bearing antifriction layer, thereby improving the antifriction layer strength at room temperature, including the strength of the layer adjacent to a backing or shell, which is especially important under short-time overloads.

Deformation temperature is at least tₙ, where tₙ is the minimum temperature at which a work plasticity of the babbitt layer is retained having regard to the β-phase grain size obtained at cooling. In particular, for a semifinished product with a β-phase grain size of about 40 µm tₙ = 210°C. A higher deformation temperature permits energy and power characteristics of the process to be reduced. The upper limit of deformation temperature is restricted by the alloy solidification temperature.

A preferable deformation speed range corresponding to superplasticity conditions is from 10⁻⁵ S⁻¹ to 10⁻² s⁻¹ The higher the deformation temperature, the greater can be the speed selected from that range.

When deformation is performed at quite low temperatures, but close or equal to tₙ, despite the fact that the superplasticity conditions are satisfied, not all of the energy incoming in the deformation process due changing the shape of a semifinished antifriction layer can be relaxed. To remove internal stresses which may occur at deformation it is recommended to carry out recrystallization annealing. After the annealing, the β-phase grain size increases to some extent, but grains change the shape, particularly to round. The rounding of β-phase grains results in increased resistance of the antifriction layer material to development of fatigue cracks over boundaries of the phase, that are typical of babbitts [7]. In addition, the recrystallization process is accompanied by reduction of the grain hardness, this enhancing the antifriction properties of babbitt.

Therefore, the plain bearing antifriction layer with a globular structure exhibits an enhanced wear resistance and effectively resists to the development of fatigue cracks in the bearing service.

The principal method steps including: producing a semifinished antifriction layer having a structural homogeneity, and subjecting the semifinished layer to plastic deformation under superplasticity conditions, that are directed at improving the quality of a plain bearing antifriction layer, are novel and non-obvious.

Irrefutable novelty of the principal method steps in combination with additional steps is proved by the ability of varying the conditions of molten metal crystallization, subsequent deformation and heat treatment for further improvement of the antifriction layer quality and producing a plain bearing antifriction layer structure adapted to particular operation conditions. Namely, a structure can be obtained which provides the antifriction layer strength under short-time loads that appear, in particular, at a system shutdown, or an enhanced long-time strength that reduces the risk of appearance of fatigue cracks.

The invention will be more fully described by way of examples with reference to the accompanying drawings, in which:
Figs 1 to 3 show successively a schematic diagram of implementing a method according to the invention;
Fig.4 shows a babbitt layer microstructure obtained at stationary casting and air cooling of a bearing;
Fig.5 shows a babbitt layer microstructure obtained at cooling by means of a punch having a temperature of 100°c;
Fig. 6 shows a babbitt layer microstructure obtained at cooling by means of a punch having room temperature;
Fig. 7 shows a babbitt layer microstructure obtained at casting babbitt into an attachment having room temperature;
Fig. 8 shows a babbitt layer microstructure after deformation and recrystallization annealing;
Fig.9 shows a photograph of models of plain bearing shells, where an antifriction layer was produced by a present method (left) and by method [1] (right);
Fig. 10 shows a photograph of a plain bearing shell, where an antifriction layer was produced by a present method.

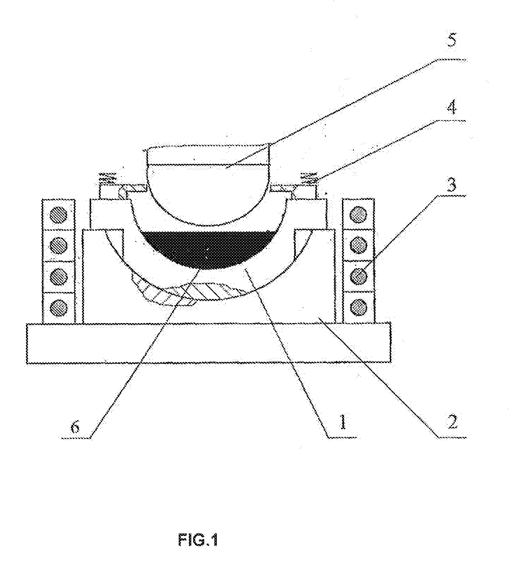

A bearing shell 1 (Fig. 1) is placed into an equipment comprising a lower part 2 and two side parts (not shown) and including an electrical heating unit 3 and a counter-pressure mechanism 4. A punch is shown by reference numeral 5. Babbitt layer is shown by reference numeral 6.

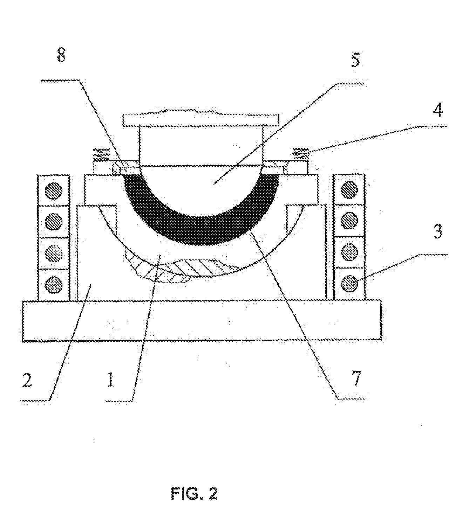

The assembled equipment is arranged in a working zone of the electrical heating unit 3. The equipment and the heating unit are, in turn, mounted on a hydraulic press base (not shown). Molten babbitt 6 is cast into a cavity defined by a surface of the shell 1 and side parts of the equipment. The molten metal 6 is cooled and redistributed by means of the punch 5 to produce a semifinished antifriction layer 7 (Fig.2). As this takes place, a cavity 8 forms between the equipment parts and acts as a compensator at plastic deformation of the semifinished layer.

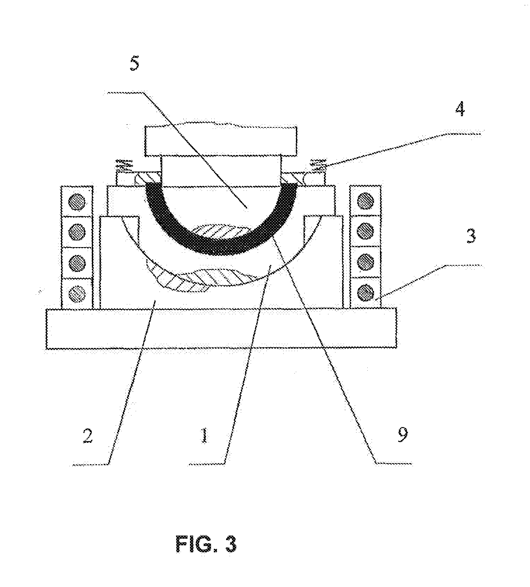

The semifinished layer is subjected to plastic deformation to produce an antifriction layer 9, while the excess metal is removed into the compensator 8 (Fig.3).

### Examples of Method Embodiments

In the examples described below, babbitt having the composition Sn-Sb11-Cu6 (B83) and a solidification temperature of 237°C was used as a material for an antifriction layer.

It will be understood that other grades of babbitt may be also used.

Furthermore, the examples describe a method for producing an antifriction layer of a plain bearing including a shell. A method of producing an antifriction layer of a plain bearing having a backing is more simple because a simpler deformation method can be used, in all other respects it has no principal distinctions over the above method, that is why no corresponding example will be described.

It will be understood that in implementing the method various steps of forming an antifriction layer may be used, e.g. casting by squeezing [4], and steps of cooling for providing structural homogeneity, e.g. by air-water stream. No examples of using these operations will be described as they are known.

Therefore, the described examples do not embrace all of the possible embodiments of the invention.

Casting was performed into a plain bearing shell taken from a steam turbine that was in service at a heat power plant, and into specially manufactured shell models. The shell models enabled the study of influence of conditions of crystallization, deformation and heat treatment on antifriction layer characteristics. To this end specimens were cut out from the shell models and used for direct study of the obtained structure and for strength tests of the adjacent layer.

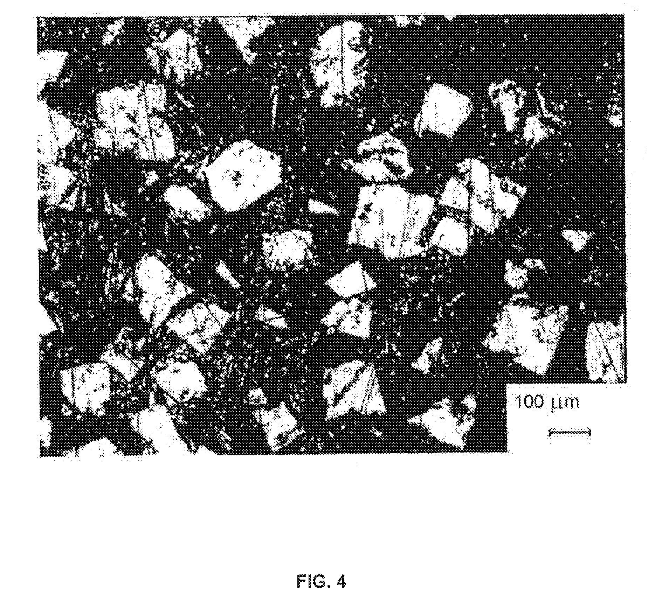

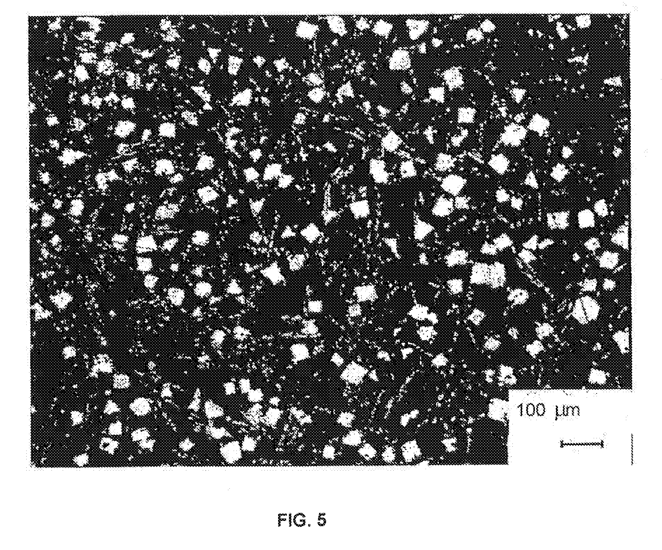

Example 1. A shell model was manufactured with dimensions of 90 × 70 mm and mean cast surface diameter of 55 mm. The shell surface was prepared to casting by sand blasting, etching and tinning. The shell was arranged in equipment, joints between the shell and parts of the equipment were sealed by a heat-resistant mass, a water-soaked asbestos powder. The assembled equipment with the shell was placed into a working zone of an electrical heating unit. The equipment with the shell was heated by the electrical heating unit to a temperature of 240°C. Molten babbitt having a temperature of 450°C was cast into a cavity defined by the shell surface and side parts of the equipment. At the same time a punch was heated to a temperature of 100°C. The molten metal was redistributed by means of the punch to form a semifinished antifriction layer having a thickness of 10 mm in the maximum section. This thickness was selected so that to provide a deformation degree of 40% at the step of deformation of the semifinished antifriction layer. The deformation degree was calculated using method [8]. Fig.5 shows a microstructure of the semifinished layer after cooling. Mean size of β-phase grains was 40 µm, while means grain size of the babbitt subjected to stationary casting and air cooling by method [1] was 200µm (Fig.4). Temperature tₙ corresponding to the grain size of 40 µm was experimentally determined as 210°C. Deformation was performed at a temperature of 220°C. As the temperature is quite high, deformation was carried out at a speed of 8x10⁻³ s⁻¹. Deformation was carried out in isothermal conditions. Deformation was conducted until a predetermined antifriction layer thickness of 5 mm, with account of a machining allowance, was attained.

Electrical heating unit was then disabled, and the shell was cooled in air to room temperature and then removed from the equipment.

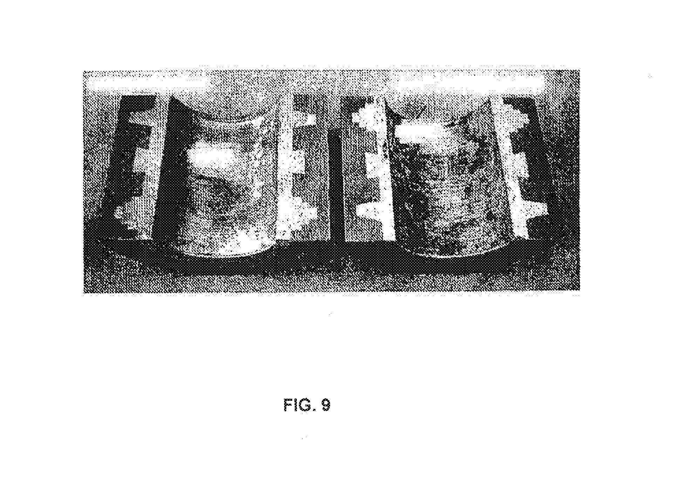

In this example molten metal was distributed, cooled and subjected to deformation in a single operation. Such a procedure enhanced, the method efficiency. Fig. 9 shows a model shell with the produced antifriction layer and a comparative model shell with the antifriction layer produced by method [1]. Both models are shown prior to machining. Difference in the antifriction layer quality is clearly seen. In particular, arrow indicates big pores in the bulk and on the surface of the antifriction layer formed by method [1].

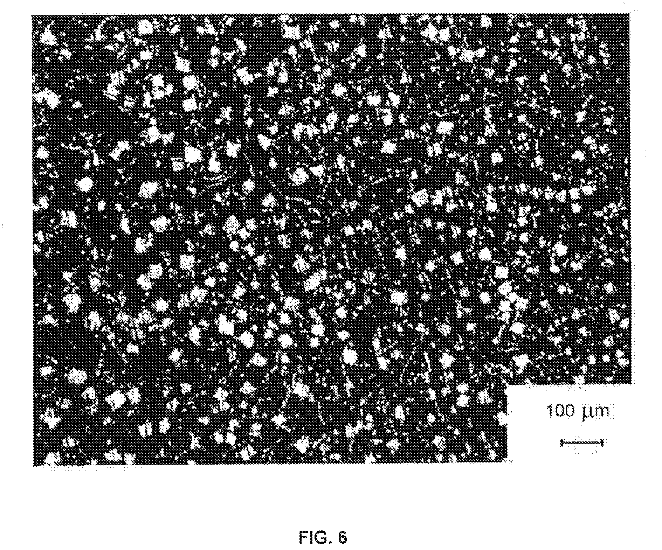

Example 2. The Example is similar to Example 1 except that the molten metal was cooled by bringing a punch having room temperature to the molten metal. That cooling enabled formation of babbitt microstructure with a mean β-phase grain diameter of 30 µm as shown in Fig.6. The grain size reduction by 10 µm as compared to the grain size obtained in the previous Example did not lead to changing temperature and speed conditions of deformation. But the use of a punch having room temperature enabled power consumption for producing a plain bearing antifriction layer to be reduced.

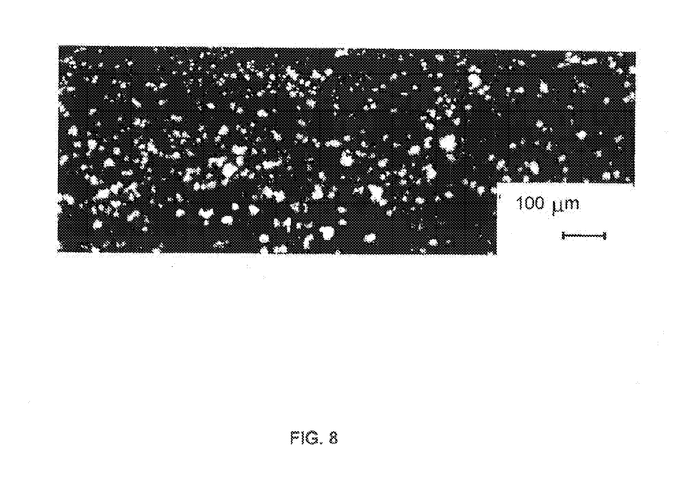

Example 3. The Example is similar to Example 1 except that deformation was performed at a temperature close or equal to 210°C. The shell with obtained antifriction layer was then subjected to recrystallization annealing at a temperature of 130°C for 1.0 hour. The treatment enabled the formation of an antifriction layer with globular β-phase grains, microstructure of which is shown in Fig.8. The plain bearing antifriction layer with a globular structure exhibits increased wear resistance and resists well to development of fatigue cracks in the bearing service.

Example 4. The Example is similar to Example 1 except that the deformation temperature was equal to 230°C, this enabling higher deformation speeds of up to 10⁻² s⁻¹ to be used. This measure was aimed at reducing the power consumption and improving the method efficiency.

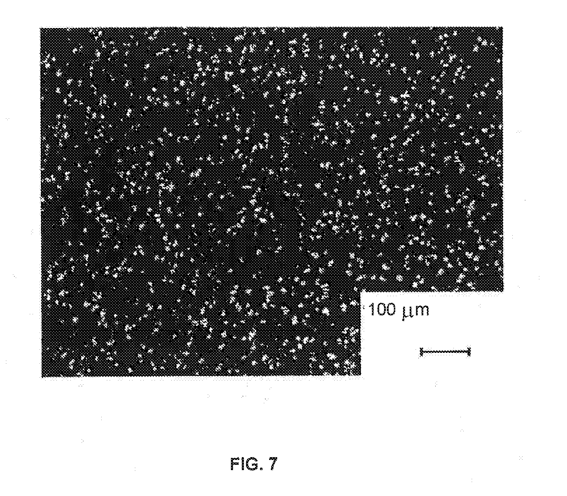

Example 5. Molten babbitt having a temperature of 450°C was poured into an attachment shaped in correspondence with the shell and having room temperature. This step of cooling provided the most fine-grained babbitt structure as shown in Fig.7 with a mean β-phase grain size of 5 µm. A temperature tₙ of 180°C was experimentally set for such a grain size. Then the semifinished product was removed from the attachment. The semifinished product was placed into a shell fixed in equipment, the system was heated to a temperature of 200°C; the semifinished product was subjected to deformation at this temperature at a deformation speed of 10⁻³ s⁻¹ Deformation at such a temperature made it possible to retain the fine-grain structure, contributing to the increased fatigue strength of the antifriction layer.

Example 6. The Example is similar to Example 1 except that a plain bearing of a steam turbine which was in service at a heat power plant was subjected to repair, the bearing shell had dimensions of 310 x 210 mm and a mean cast surface diameter of 162 mm.

Example 7 is similar to Example 6 except that a plain bearing of a steam turbine which was in service at a heat power plant was subjected to repair, the bearing shell had dimensions of 150×140 mm and a mean cast surface diameter of 100 mm.

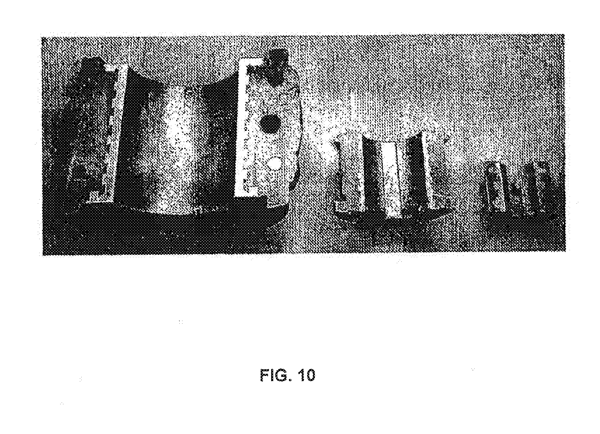

Fig.10 shows shells with the produced antifriction layer and a model shell.

Examples 6 and 7 demonstrate that the temperature and speed conditions selected for the model shells can be recommended to use in the renewal and manufacture of plain bearings.

Specimens were cut out from the model shells produced by the methods described in Examples 1 to 5 in order to study the structure and to test the antifriction layer for a shear relative to the shell in order to assess the adhesive bond strength. The shearing tests were conducted at versatile testing machine INSTRON 1185. A specimen produced by methods [1,4] was also tested for shear for comparison. Test results are summarized in Table below.

| Method of producing a plain bearing antifriction layer | shearing stress, τ, MPa |
|---|---|
| Stationary casting in air | 20.0 |
| Casting by squeezing | 22.5 |
| Plastic deformation under superplasticity conditions | 32.0 |

It is evident from the Table that the adhesive bond between the antifriction layer and the shell has a maximum strength when the antifriction layer is produced using plastic deformation.

### References cited:

1. Reference Book of Metal Worker. Ed. by A.G.Rahshtadt et al., M., Mashinostroyenie, 1976, v.2
2. Technology of Ship Repair, I.M.Gurevich, 1970, pp. 149-151
3. RU Patent No.2160652, IPC B22D 19/08, 2000
4. RU Patent No.2167738, IPC B22D 19/08, 2001
5. Influence of Structural State on Mechanical Characteristics of Babbitt. F.A.Sadykov, N.P.Barykin, I, Sh.Valeev. Physics and Chemistry of Metal Treatment, 2001, No.2, p.86-90.
6. Fundamentals of Pressure Welding. Gelman A.S. Mashinostroyenie, 1970, 312 p.
7. Zernin M.V., Kuzmenko A.G., Savonichev P.I. Experimental study of Crack Birth in Babbitt Layers Applied on Steel Base. Plant Laboratory, 1998, No.1, pp.38-47.
8. Storozhev M.V., Popov E.A. Theory of Pressure Treatment of Metals. Textbook for Colleges, M., Mashinostroyenie, 1977, 423 p.

## Claims

1. A method of producing an antifriction layer of a plain bearing, including: casting babbitt into a bearing shell or backing and then forcedly cooling the babbitt at a speed providing structural homogeneity of the antifriction layer, mainly by cooling on the side of the cast-in layer, **characterized in that** said casting of babbitt into a shell or backing produces a semifinished antifriction layer which is subjected to plastic deformation by means of a punch under superplasticity conditions to produce an antifriction layer, wherein the bearing shell or backing being used as a die.

2. The method according to claim 1, wherein said deformation of the semifinished layer is performed to a deformation degree of between 25% and 45%.

3. The method according to claim 1, wherein after said casting of babbitt the molten metal is redistributed by means of a punch to produce a semifinished antifriction layer.

4. The method according to claim 3, wherein said casting of the molten metal is performed into a heated shell or backing, and said cooling is performed on the side of the cast-in layer by means of a punch having a temperature of no more than 100°C.

5. The method according to claim 4, wherein said punch has room temperature.

6. The method according to claim 1, wherein said casting of babbitt is performed into a shell or backing, or in an attachment shaped in accordance with the backing or shell.

7. The method according to claim 6, wherein said casting of babbitt is performed into a heated attachment, and said redistribution and cooling of the molten metal is performed on the side of the cast-in layer by means of a punch having a temperature of no more than 100°C.

8. The method according to claim 7, wherein said punch has room temperature.

9. The method according to claim 7, wherein said casting of babbitt is performed into an attachment having room temperature, and the molten metal is redistributed by means of a heated punch.

10. The method according to any one of claim 1, 4, 7 or 9, wherein a deformation temperature is at least tₙ, where tₙ is the minimum temperature at which work plasticity of the babbitt layer is preserved having regard to the β-phase grain size obtained at the cooling step.

11. The method according to claim 10, wherein a deformation temperature is close or equal to tₙ, and after the deformation a recrystallization annealing is performed by heating the bearing to a temperature of between 100°C and 150°C and holding at that temperature for 0.5-1.0 hour.

12. The method according to claim 1, wherein a deformation speed is in the range from 10⁻⁵ s⁻¹ to 10⁻² s⁻¹, the higher the deformation temperature, the greater may be the speed selected within said range.
